# EUROPEAN PATENT APPLICATION

(11) **EP 1 560 166 A2**
(43) Date of publication of application: **03.08.2005**
(21) Application number: 05001570.0
(22) Date of filing: 26.01.2005
(51) Int. Cl.: G07B 17/02

(54) **Method for storing mail piece data**

(30) Priority: 29.01.2004 US 767020
(71) Applicant: PITNEY BOWES INC., Stamford, CT 06926-0700 (US)
(72) Inventor: Baker, Christopher A., New Canaan, CT 06840 (US); Starrett, Cortland D., Brookston, IL 47923 (US); Quine, Douglas B., Bethel, CT 06801 (US)
(74) Representative: HOFFMANN - EITLE

(57) **Abstract**

A method for retrieving mail tracking details of a mail piece sent to a recipient using a stored image of the mail piece. A mail piece is provided with a unique mail piece tracking identifier and the identifier is stored in a database. An image of the mail piece is then acquired and also stored in the database in association with the unique mail piece tracking identifier. Mail piece tracking details for the mail piece are then acquired as the mail piece is delivered to a recipient, which tracking details are stored in the database in association with the mail piece tracking identifier and stored image. A user seeking the particular tracking details is then presented with at least one stored image of a mail piece, and when an image is selected by a user, the user is presented with the mail tracking details that were stored in association with the selected mail piece image.

## Description

The present invention relates to collecting and storing mail piece identification and tracking information.

The production of mail requires a number of steps that must be coordinated in order for all the elements to come together and to meet the postal service pickup deadlines and the mailer's distribution schedules. The ability to track the production floor operations is essential to ensure that service level agreements are met. This in turn drives a need to provide a way for a customer owning high-speed mailing equipment to transfer customer data from their equipment based on real-time measurements and data collection. The data collected needs to be transferred over a localized network or over the internet to a data processing system.

In the past, the data collection mechanisms were independent elements and storage mechanisms, which often implemented incompatible and disconnected data sources that could not be brought together to provide an overall view of the mail processing processes. Typically, data was provided using dedicated programs and work stations requiring constant presence by the user on the work floor.

It was often typical, that customers had multiple mailing sites but had no means to aggregate the mailpiece data from each of those sites. Additionally, some customers maintained mixed vendor shops each having a mailing system using mailing data that was incompatible relative to one another. Thus, the mailing data present at each of the aforementioned sites could not be aggregated between one another to enable a unified view of all the customers mailing operations.

Further, it has proven desirable that a user (mail sender or recipient) may often find it necessary to review the details on a particular mail piece that has passed through a mailing system (e.g., the United States Postal Service). One such objective to do so would be to track and trace a mail piece using minimal information.

Tracking and tracing mail pieces typically requires a unique identifier for each mail piece in order for it to recognized. However, the majority of mail pieces do not have such a unique identifier thus obviating tracking and tracing of such mail pieces. The United States Postal Service (USPS) did offer options (registered / certified mail) to provide individual mail tracking. However, these options were costly and only provided tracking at the beginning and end of the postal distribution cycle.

One prior art attempt to overcome the above deficiencies in tracking individual mail pieces was to assign a unique code to each mail piece (e.g., on mail pieces envelope). This approach is currently is use by various private carriers (e.g., FedEx, UPS, etc.). However, this approach is deficient in that the unique code is not shared amongst various postal couriers and requires significant investment by each private carrier to utilize it's own unique codes (e.g., requires infrastructures of scanners dedicated for it's unique code.

The present invention overcomes, the aforesaid deficiencies by providing data tags that allow mail pieces to be recognized as they pass through: an insertion system, a sortation system, a postal sortation system and a postal distribution system. This allows both mailers and the recipients (e.g., customers) to determine the current status of the mail piece as well as the contents of the mail piece and the predicted (or actual) delivery time for the mail piece. On a mail piece's return path to a mailer (e.g., a payment for a invoice) the present invention enables mailers to determine the number of incoming orders or bill payments in transit such that the mailers can estimate the resources that will be needed to process the orders as well as providing the mailers with an estimate as to incoming money.

In a preferred embodiment, the present invention obtains or creates a unique (virtual) identifier for each mail piece that allows mailing statistics to be generated and permits information presentment using internet browser technology, which can be accessed from any computer using a standard browser worldwide. The present invention further provides a low cost and currently supported method to apply a unique identifier to a mail piece, which can be obtained by a user of the tracking system without requiring the user to have any previous knowledge of the unique identifier. For instance, the thickness of a mail piece, an image of a mail piece, a postal meter sequence number, postal amount and the postal meter ID number can all be parameters used to distinguish multiple mail pieces from one another that may be in the same batch of mail being mailed to the same destination address.

An example of such a situation is that many people have multiple accounts with a mutual fund (e.g., UTMA, IRA, Roth IRA, 40 1 (k)) in the names of the husband, spouse and children residing at the same address with the same mutual fund. Many envelopes will arrive at that residence with the same POSTNET barcode (the destination address). And if a PLANET code is applied to that mail piece which is unique to a particular mailer, there may be still numerous envelopes that contain the same POSTNET code and PLANET code combination that will falsely report as the same as they pass through the postal system using the PLANET code tracking system of the USPS. Hence an object of the present invention is to use information additional to the POSTNET code and PLANET code information available on a mail piece so as to distinguish each mail piece separately and track each mail piece separately and accurately.

In a preferred embodiment, the present invention tracking and tracing system preferably uses at least two levels of information to gain an understanding as the tracking of each mail piece, or a series of mail pieces. When additional information is needed to distinguish similar mail pieces from one another, the present invention system can preferably retrieve the actual image of the face of the mail piece (e.g., the outside front image of the mail pieces envelope) so that it can be reviewed and used to distinguish itself from other mail pieces often present in a same batch of mail.

The above and other objects of the present invention will be apparent upon consideration of the following detailed description, taken in conjunction with the accompanying drawings, in which:

Fig. 1 is a system level diagram depicting some of the components of the present invention track and trace system;

Fig. 2 is a flow chart depicting the processing of a mail piece;

Fig. 3 depicts a lookup table assembled by the present invention track and trace system;

Fig. 4 is a flowchart depicting the usage of the present invention track and trace system by a user; and

Figs. 5-8 depict computer screen displays of the present invention track and trace system.

As will be described below, the present invention provides a mail piece tracking and tracing system that is designed to track mail pieces as the progress through various routing and sorting facilities from source to destination in conjunction with individual mail piece information compiled during typical mail piece processing. More specifically the present invention preferably collects mail piece images from mail automation equipment such as inserter systems, and MLOCR sorting machines. Barcodes applied to mail pieces can be read by mail automation equipment and decoded information is conveyed to a data repository for subsequent retrieval enabling mail piece tracking.

As previously mentioned, the USPS currently provides mail tracking information on specially bar-coded mail pieces, commonly known as a PLANET code, which is used by the USPS to report the mail piece locations as they progress through the various mail handling facilities of the postal distribution system. Each time the mail automation equipment of the USPS is presented with a mail piece, an entry is made by the USPS into its PLANET code data base. Once this data is collected, it is processed and presented to the tracking system of the present invention, preferably via the intemet. Thus, a user of the present invention tracking and tracing system preferably visits a web site that preferably presents the user with a search page enabling search queries into the present invention tracking system. That is, a user can enter information known about a mail piece (e.g., recipient name, time the mail was sent, PLANET code number, etc.), and after entering the information, thumbnail images of mail pieces that match the criteria are then presented to the user. The user is then preferably enabled to select one of the thumbnail images to show all of the tracking events associated with that mail piece.

It is also to be understood that the present invention tracking and tracing system has applications regarding incoming mail, such that when PLANET codes are printed on return inserts, information can be gathered regarding this mail piece as it progresses through a postal system to a mailer. Therefore, from the integrity of the time and date the outbound letter was printed, inserted, sorted and dropped off at a post office, through various USPS facilities to a customers local mail sorting facility, delivery statistics are gathered by the present invention tracking and tracing system.

In essence, and as will be apparent from the below description, information about a mailing or individual mail pieces is gathered to create a meta-description of the mail piece beyond the current technology associated with the USPS's POSTNET and PLANET barcodes. For example, the thickness of a mail piece, an image of a mail piece, a postal meter sequence number, postal amount and the postal meter ID number can all be parameters used to distinguish multiple mail pieces from one another that may be in the same batch of mail being mailed to the same destination address.

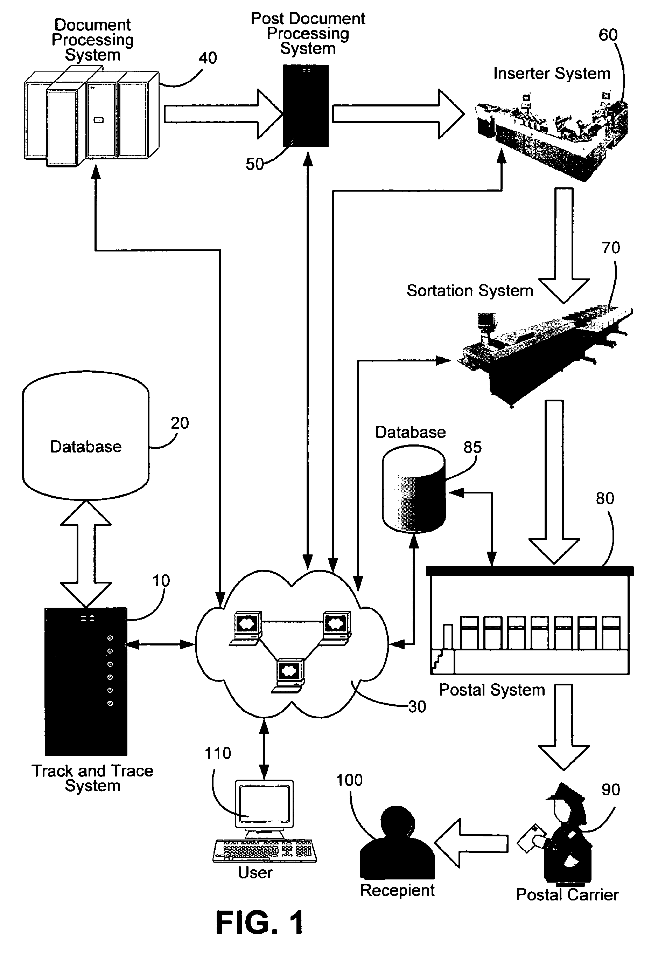

Turning now to Fig. 1, there is shown the principle components of the preferred embodiment of the subject invention, and of course it is to be appreciated that the preferred embodiment of the present invention may be modified as required for a specific implementation or that alternative embodiments may of course exist. Designated by reference numeral 10 is the track and trace system that is utilized to enable tracking of individual mail pieces, as will be described in more detail below. It is to be appreciated that the track and trace system 10 includes the necessary computer hardware and software for enabling mail piece tracking based upon previously stored data relating to that mail piece, as again will be described in further detail below.

Since the present invention concerns the overall system components and use of stored data, a detailed description of the specific components of the track and trace system, and their modes of communication is not necessary for one skilled in the art to gain a proper understanding of the present invention. For example, shown coupled to the track and trace system 10 is a database 20 for storing the aforesaid stored mailing data, which database may of course be in many differing configurations.

Track and trace system 10 is coupled and configured to be interoperable with the internet 30 using known methods of intemet protocol communication. Thus for all described components herein of the subject invention, their specific communication protocols for communicating with one another, whether it be via the internet or otherwise, and specifically to the track and trace system 10, will not be described in any further detail.

Designated by reference numeral 40 is a document processing system that is used to create the electronic mail contents or documents to be contained in a finished mail piece. For example, the document processing system 40 may be used by a utility company for generating the electronic files corresponding to the billing statements for each of its customers. Typically, the document processing system generates an electronic mail run file containing the billing statements for a plurality of its customers, with the document processing system 40 being in the configuration of a mainframe computer. Thus, this electronic mail run file at a minimum contains the names of the mail piece recipients in addition to the mail piece recipient's address and contents of the mail piece (e.g., billing statements). The POSTNET and/or PLANET code barcode may also be contained in the electronic mail run file.

The document processing system 40 may be coupled to the track and trace system 40, preferably via the internet 30, and programmed to download a copy of the aforesaid mail run file for storage in the database 20 coupled to the track and trace system 20. After the mail run file is received by the track and trace system 10, it may preferably then create individual files for each mail piece recipient of the mail run file in database 20. Preferably, each file may contain the recipients: name; addressing information; phone number; document contents; POSTNET and/or POSTNET barcode information. Again, it is to be appreciated that this mail run file may or may not be copied to the track and trace system 10, and if yes, only selected portions of it may be retained in the database 20 for enabling future mail piece tracking according to the present invention.

A document post processing system 50 may be coupled to the document processing system 40 for receiving and merging new data with the aforesaid electronic mail run file to create the meta-data available through the present invention. Typically, post processing systems 50 are implemented for modifying the electronic mail run data file, an example of which is known as StreamWeaver ™, which is commercially available from Pitney Bowes Inc. Stamford, Connecticut, USA, and described in U.S. Patent Number 6,658,430. The data added to the mail run data file possibly include adding POSTNET and PLANET code barcodes, information about selective advertising materials added to the mailing, the mailing batch numbers, submission times to the postal service, changes to the mail run data file such as new corporate logos, new terms and conditions, new offers, new company names that have been replaced in the print file due to corporate changes or regulatory changes since the legacy system was programmed to created the original fixed billing information.

The document post processing system 50 may be coupled to the track and trace system 40, preferably via the internet 30, and like the aforesaid document processing system 40, may be programmed to download a copy of the modified mail run file for storage in the database 20 coupled to the track and trace system 10. In the event the mail run file was previously copied to the track and trace system 10, the information newly added to the mail run file by the post processing system 50 may be respectively supplemented to each already created file for each individual mail piece contained in the mail run file. It is to be appreciated that any information from the mail run file may or may not be copied to the track and trace system 10 from the post processing system 50, and if yes, only selected portions of it may be retained in the database 20 for enabling future mail piece tracking according to the present invention.

Typically after processing of the mail run file is performed by the post processing system 50, the mail run file is presented to a high-speed printer (not shown) for printing all the documents contained in the mail run file. After the documents are printed, they are presented to an inserter system, shown generally by reference numeral 60, that physically creates all the individual mail pieces contained in the mail run file as printed by the aforesaid printer. An example of such inserter systems can be found in U.S. Patent Numbers 6,364,305, 5,797,015 and 5,419,440. Typically, such an inserter system 60 includes an input system that feeds printed documents contained in the mail run file typically from a paper web to an accumulating station that accumulates the sheets of paper in collation packets. Typically a single sheet of a collation is coded (the control document), which coded information enables the control system of the inserter system to control the processing of documents in the various stations of the mass mailing inserter system. The code can comprise a bar code, UPC code or the like. After sheets are accumulated into collations the collations are folded in a folding station and the folded collations are then conveyed to one or more insert feeder stations. The insert feeder station(s) is operational to convey an insert (e.g., an advertisement) to be nested with the aforesaid sheet collation being conveyed along the main deck. The sheet collation, along with the nested insert(s) are next conveyed into an envelope insertion station that is operative to insert the collation into an envelope. The envelope is then preferably conveyed to postage station that applies appropriate postage thereto.

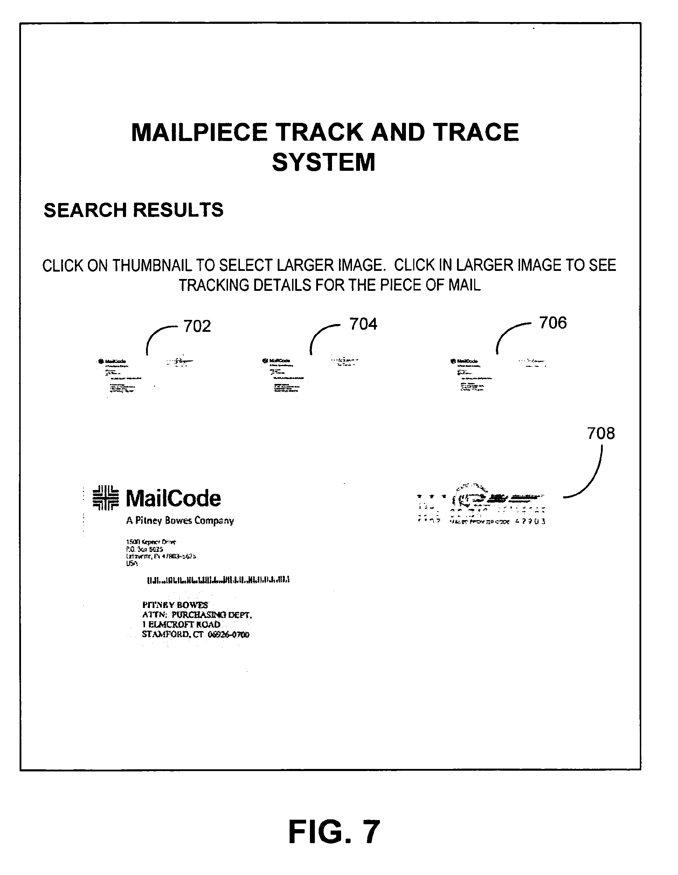

As previously mentioned, inserter system 60 includes a control system coupled to each aforesaid modular component of an inserter system, which control system controls and harmonizes operation of the various modular components implemented in inserter system 60. Preferably, the control system uses an Optical Character Reader (OCR) for reading the code from each coded document. To enable this harmonized operation, the control system is typically provided with the mail run file from either document processing system 40 or post processing system 50. Typically, as contained in an inserter system 60, this mail run file is referred to as a Mail Run Data File (MRDF), which in addition to the aforesaid mail run file contains information relevant to each mail piece acquired during the creation of the mail piece by an inserter system 60. This acquired information can include what inserts were added to a mail piece, the size of the mail piece (e.g., weight, thickness, etc.), the postage amount, and the serial number of the postage meter that applied postage to the mail piece. Further, if the inserter system includes a camera, the original MRDF data may also be supplemented with a visual image of the finished mail piece (e.g., the outside face of the envelope 702, see Fig. 7).

Like the aforesaid document post processing system 50, the inserter system 60 may be coupled to the track and trace system 10, preferably via the internet 30, and programmed to download a copy of the MRDF for storage in the database 20 coupled to the track and trace system 10. In the event a mail run file was previously copied to the track and trace system 10, the information newly added to the mail run in the MRDF may be respectively added to each already created file for each individual mail piece contained in the mail run file. It is to be appreciated that any information from the mail run file may or may not be copied to the track and trace system 10 from an inserter system 60, and if yes, only selected portions of it may be retained in the database 20 for enabling future mail piece tracking according to the present invention.

After individual mail pieces are formed by an inserter system 60, the mail pieces are then typically conveyed to a sortation system, shown generally by reference numeral 70. Sortation systems 70 are well known in the art as evidenced by U.S. Patent Number 6,539,098. The function of the sortation station 70 is typically to sort the mail pieces belonging to a batch of mail into sortation groups (based upon the POSTNET of each mail piece) according to Untied States Postal System (USPS) standards for enabling discounted postage on each mail piece. The sortation system 70 typically scans each mail piece to determine and cleanse a recipients address so as to apply the correct POSTNET to the mail piece. The POSTNET is an eleven digit barcode character string wherein the first five digits is the typically five digit zip code (recipient post office), the next four digits corresponds to a recipients block face (side of a city block) and the last two digits correspond to the recipient's street address.

When a mailer subscribes to the PLANET code service offering of the United States Postal System, a sortation system 70 also typically applies the PLANET code barcode to each mail piece, The destination CONFIRM service code is a 12 or 14 digit barcode where the first two digits represents the PLANET barcode is being used for origin CONFIRM service with the next 9 or 11 digits identify the mailer and the mail piece. The last digit is a checksum to ensure data integrity. Specifically, of these 9 or 11 digits, the first five digits is a unique (and fixed) 5-digit ID assigned by the United States Postal Service to identify mailers subscribed to the PLANET code service offering. The next four (4) or six (6) digit field is the mailing (or customer) ID that is defined and assignable by the mailer to identify a mail piece to that mailer. Currency only a four (4) digit assignable field is used for the mailing (or customer) ID.

In addition to applying a POSTNET and PLANET barcode to each mail piece, the sortation system 70 includes the necessary hardware for scanning each mail piece and storing the scanned image of each mail piece 702 (e.g., see Fig. 7). In accordance with the present invention, the sortation system 70 electronically stores the image of each mail piece along with it's applied POSTNET and PLANET barcode.

The sortation system 70 is also coupled to the track and trace system 10, via the intemet 30 and programmed to download the aforesaid electronic file to the track and trace system 10. In the event a mail run file was previously copied to the track and trace system 10 that corresponds to the mail pieces sorted by sortation system 70, this information compiled in sortation system 70 is respectively added to each already created electronic file for each individual mail piece sorted by sortation system 70. And in the event a mail run file was not previously downloaded to the track and trace system 10, the aforesaid electronic file received from sortation system 70 will then form the track and trace database 20 for mail pieces as further mentioned below for tracking individual mail pieces.

As is known in mail piece processing, after a batch of mail has been sorted (via sortation system 70) for postal discounts, it is then delivered to a postal distribution system 80 (e.g., the United States Postal System) for enabling delivery of individual mail pieces to recipients 100, via a mail carrier 90. As is also well known, the United States Postal System 80 provides barcode readers that read POSTNET and PLANET codes from mail pieces at various locations in the mail stream. For example, these readers are located at postal service mail sorting sites. These readers are typically in communication with the United States Postal Service CONFIRM server (e.g. database 85), which typically logs into the confirm server database the date, time and location when a particular mail piece passes through the multiple postal service mail delivery stream scan point locations and the time the mail piece was delivered to the carrier 90 for delivery to a recipient 100.

The aforesaid postal database 85 is coupled to the track and trace system 10, preferably via the internet 30, to provide the information collected on each mail piece having a predetermined PLANET code to the track and trace system 10. This tracking information is then added to a file already created for a mail piece having the predetermined PLANET and/or POSTNET code.

With the components of the present invention being described above, its method of use will now be described.

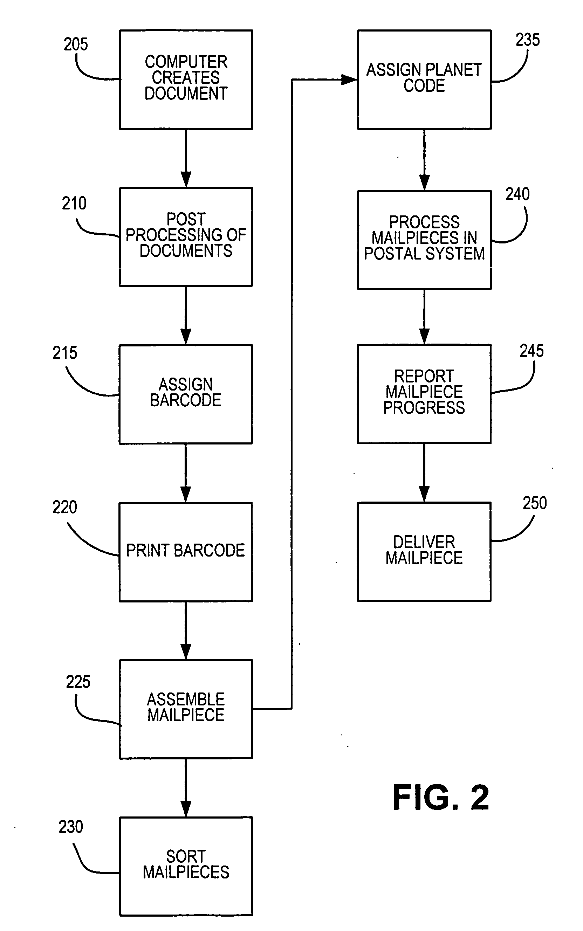

Referring now to Fig 2, and with continuing reference to Fig. 1, the present invention tracking system, as described above, has processes that span a mail pieces lifecycle (e.g., from the initial creation of the mail piece, to the final delivery of the mail piece, and even to the return mailing associated with the mail piece. Starting at step 205, a bill is initially created on a document processing system, which may have an internal identifier by which it is known to the bill creation process. As mentioned above, the mail run file used by the document processing system 40 may be forwarded to the track and trace system 10 for retrieval therein.

Typically, the bill creation systems are legacy systems which do not support introduction of new capabilities and therefore often a aforesaid post processing system 50 is utilized (step 210). As mentioned above, such a post processing system 50 introduces additional elements onto documents to be created. For instance, such additional elements may include an internal integrity checking barcode (step 215) or USPS PLANET barcodes as well as supporting additions to the mail run data file (MRDF), which is commonly the internal computer file that represents the individual mail pieces in a batch mailing file. As mentioned above, the mail run data file used by the post document processing system 50 may be forwarded to the track and trace system 10 for retrieval therein.

Next, a document is then printed (step 220) and conveyed to an inserter system 60 (step 225) so to be assembled into a mail piece (e.g., inserted into an envelope). Postage may be applied by a mailing machine coupled to the inserter system 60, in which event the MRDF of the inserter system 60 would identify the postage amount required for each mail piece assembled. Again, as mentioned above, the mail run data file used by the inserter system 50 may be forwarded to the track and trace system 10 for retrieval therein.

The assembled mail pieces are then delivered to a mail piece sortation system 70 that typically sorts sequences the mail pieces in proper order to permit the USPS to offer discounted postage rates to the sorted mail pieces (step 230). Typically, the sortation system applies a POSTNET barcode to each mail piece to qualify for the aforesaid postal discount rates.

It is to be appreciated that sortation system 70 may also preferably operate as a data acquisition device which acquires at least some of the following types of data regarding each mail piece processed: mail piece size and shape, the PLANET code, the POSTNET code, mail piece image, recipients name, processing time of day, the service urgency, the postage amount, the qualification (USPS category), and the tray or postal package that the mail piece is being shipped within. The aforesaid acquired data can then be integrated into the associated MRDF for the mail pieces.

The sortation system 70 may also preferably be utilized to print a PLANET code barcode on each outgoing mail piece, which PLANET code would be added to the MRDF to ensure that a complete set of information regarding each mail piece is available (step 235). Preferably after all the mail pieces are processed by the sortation system 70, the MRDF, as modified by sortation system 70, is forwarded to the track and trace system 10 for retrieval therein.

Once the mail is sorted and documented in accord with USPS manifesting requirements for submission, the mail pieces are then deposited with the USPS 85 for postal distribution (step 240). The individual PLANET code on the mail pieces or an ASN (Advanced Shipping Notice barcode on the package of mail destined to the same post office) allows USPS scanners to report progress of the mailing as it progresses through the USPS and record it in postal database 85 (step 245).

After the sortation process is completed in the postal system 80, the mail pieces are then delivered to recipients 100, via postal carriers 90 (step 250). Thus, in accordance with the present invention track and trace system, all data is gathered involving the processing of mail pieces from time of creation through the sortation process of those mail pieces in the postal system 80 that use the PLANET code service offering of the USPS.

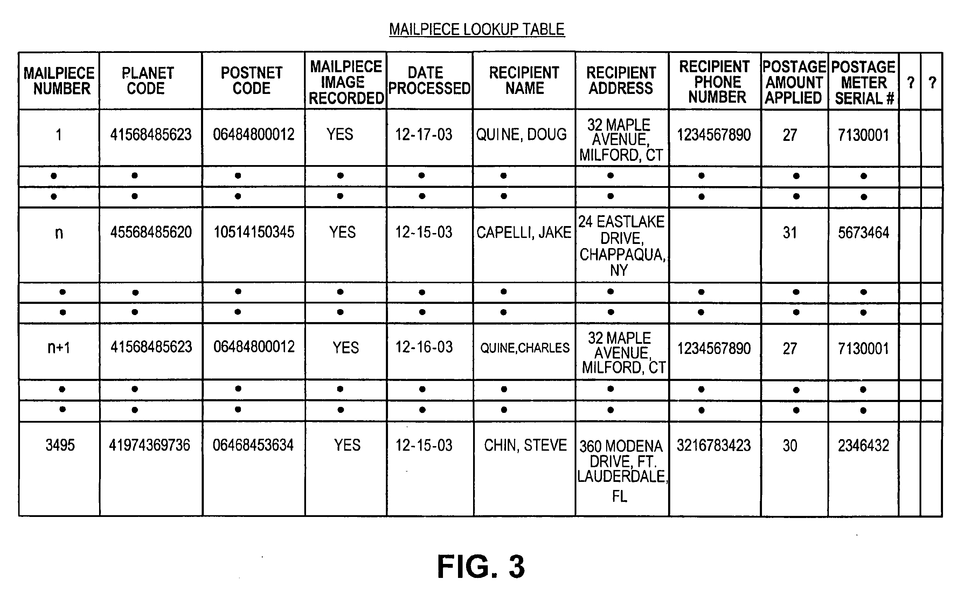

As shown Fig. 3, the database 85 of the track and trace system 80 may have a lookup table 300 that is categorized and populated with date recorded from one or more of the above described components and systems shown in Fig 1. Preferably, the database 85 of the track and trace system is configured to compile a plurality of lookup tables 300, with each corresponding to one or more client ID numbers, which ID number is preferably the 5-digit number as implemented in the PLANET code (e.g., 64845). For instance, if a user 110 (e.g. mail recipient or mail sender) of the track and trace system 10 wanted to form a search using three different 5-digit client ID PLANET code numbers then track and trace system 10 would form a lookup table compiling all mail piece data populated in database 85 that corresponds to the selected three different 5-digit client ID PLANET code numbers.

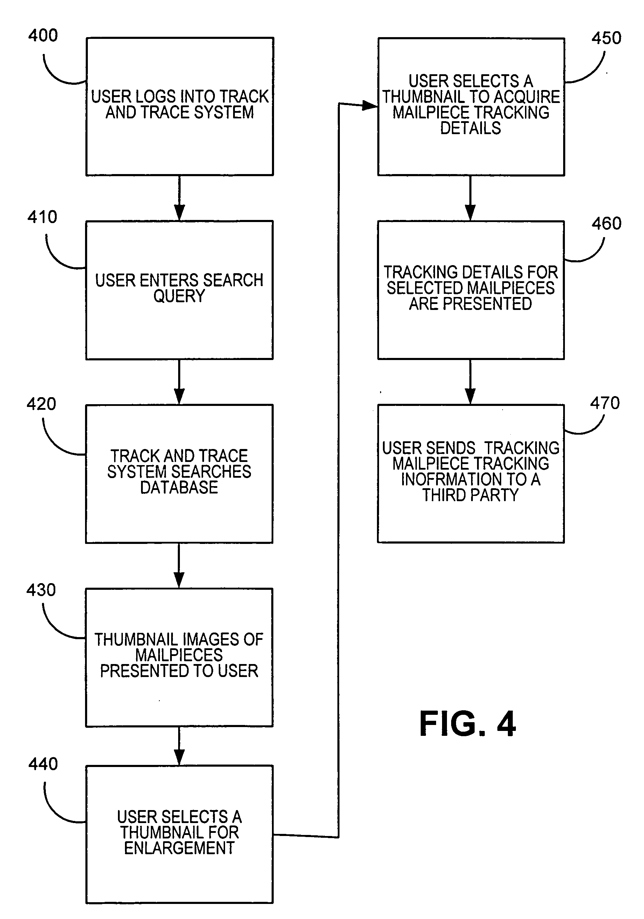

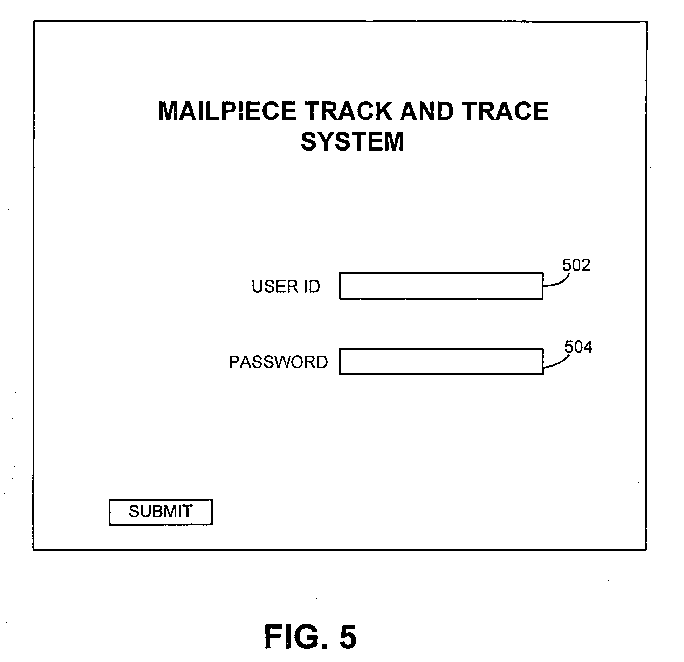

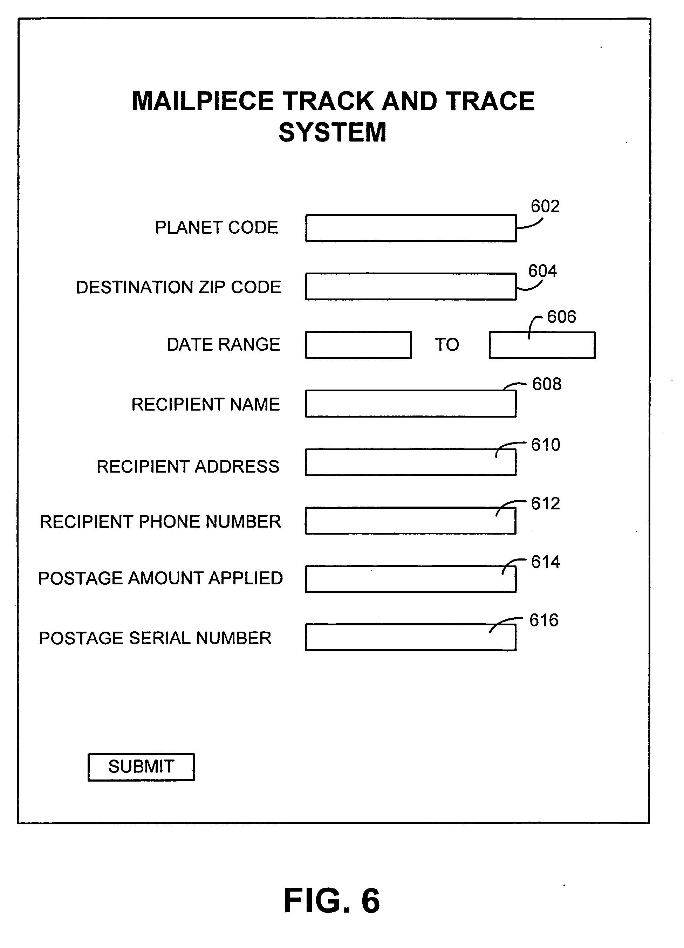

With reference to Figs. 4-8, use of the present invention track and trace system 10 by a user 110 will now be discussed. With the user 110 preferably using a PC terminal coupled to the track and trace system 10 via the intemet 30, the user 110 logs into the track and trace system (step 400) by preferably entering the user's ID and password (Fig. 5). Once authentication of the user 110 is complete, the user 110 enters a search query (step 410) corresponding to a particular mail piece of which the user desires to view it's delivery tracking details (Fig. 6). As can been seen from Fig. 6, the user 110 may form a search query using one or more of the search terms, the PLANET code used on the mail piece 602, the recipients zip code 604, the date the mail piece was processed or sent 606, the recipients name 608, the recipients address 610, the postage amount applied 612 or the serial number of the postage meter that applied postage to the mail piece 614. It is of course to be appreciated that the search query presented to a user 110 in Fig. 6 may include any combination of searching options shown in Fig. 6. Also, it is to be appreciated that a user need not know the full information contained in any given search parameter to form a search. For example, the user 110 only need to input the first five digits of a zip code in the destination zip code search parameter 604 or only need to know some consecutive digits in the PLANET code in the PLANET code search parameter 602 to perform a search.

The track and trace system 110 then access's the lookup table (Fig. 3) for the user 110 and performs a search using the search parameters just entered by the user 110 (Fig. 6) (step 420). If matches are found, the track and trace system preferably 110 presents thumbnail images of mail pieces corresponding the matching mail pieces (Fig. 7) contained in the lookup table (Fig. 3) (step 430). It is of course to be appreciated that if no matches are found, the user 110 is notified of this and is requested to perform a new search. And if more than a predetermined number of matches are found, the user 110 may be requested to performer a narrower search.

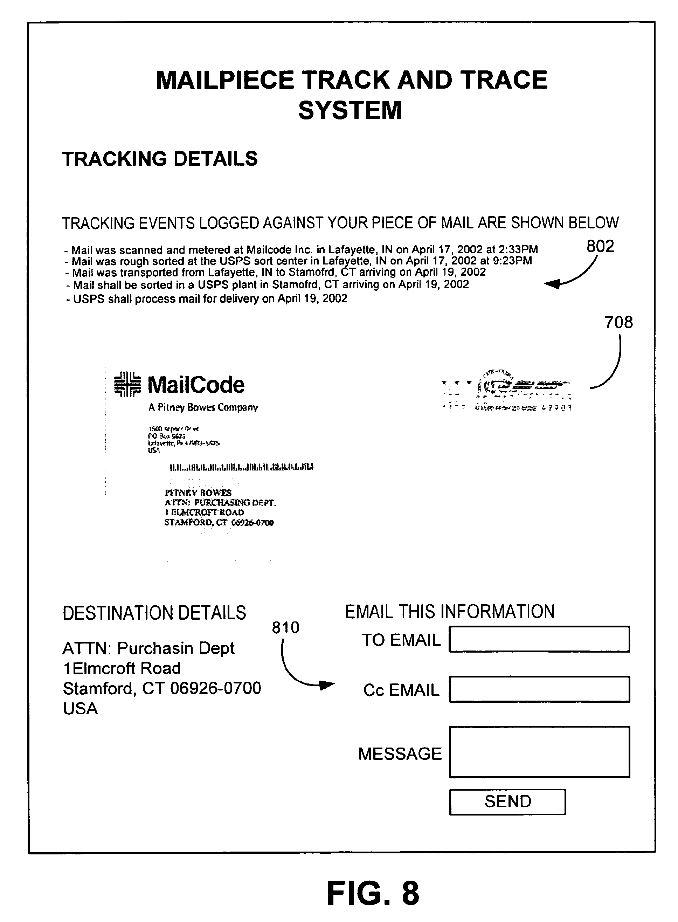

For example, Fig. 7 shows a display screen presenting the user with three thumbnail images 702, 704 and 706 corresponding to tracking information corresponding to three mail pieces contained in database 85. The user 110, preferably via a mouse, is able to select each thumbnail image (e.g., thumbnail 702) to enlarge it (enlargement 708) on screen to see all addressing details from the image of the mail piece as recorded by the track and trace system 110 (step 440). If the user 110 decides to view the tracking details for this mail piece (e.g., 708), then the user selects it by preferably using a mouse (step 450). As shown in Fig. 8, the tracking details 802 for the selected mail piece 708 is then displayed (step 460).

As is also shown in Fig. 8, the track and trace system 110 may also preferably be configured to enable the user 110 to forward these tracking details 802, along preferably with an image of the mail piece 708 to a selected emall address via the email client 810 integrated in the track and trace system 10 (step 470). And this process may of course be repeated by the user 110 as desired.

Accordingly, the present invention tracking and tracing system can provide significantly more tracking detail than does the USPS (via PLANET code).

## Claims

1. A method for collecting mail piece identification and tracking information, said method including the steps of:
providing a database for storing mail piece data;
storing a mail piece identification code in said database, wherein said mail piece identification code is associated with a mail piece prior to being delivered to a postal authority for distribution thereof;
storing at least another mail piece identification information other than said identification code in said database and associating it with said mail piece's identification code stored in said database; and
storing mail piece tracking details as compiled by a postal authority during processing of said mail piece in said database and in association with it's stored mail piece identification code and another mail piece identification information.

2. A method as recited in claim 1 wherein the mail piece identification code and another mail piece identification information are stored simultaneously in said database.

3. A method as recited in claim 1 wherein said mail piece identification code is a PLANET CODE.

4. A method as recited in claim 1 wherein said database is remote from a postal authority database implemented for compiling mail piece tracking details.

5. A method as recited in claim 1, wherein said stored mail piece identification and tracking information is accessible to a user via the intemet.

6. A method as recited in claim 1, wherein said database is remote from and in communication with a mail piece generating device for receiving said mail piece identification code.

7. A method as recited in claim 6, wherein said database is remote from and in communication with said postal authority for receiving said mail piece tracking details.
